# FASCICULE DE BREVET EUROPEEN

(11) **EP 4 363 274 B1**
(45) Date de publication et mention de la délivrance du brevet: **25.06.2025**
(21) Numéro de dépôt: 22734008.0
(22) Date de dépôt: 23.06.2022
(51) Int. Cl.: B60R 13/06, H01Q 1/32, B60J 10/00, H01Q 1/12, B60J 10/70

(54) **VITRAGE AVEC UNE PLAQUE D'ANTENNE ET PROCÉDÉ DE FABRICATION DE CE VITRAGE**
VERGLASUNG MIT EINER ANTENNENPLATTE UND VERFAHREN ZUR HERSTELLUNG DIESER VERGLASUNG
GLAZING WITH AN ANTENNA PLATE AND METHOD OF MANUFACTURING THE SAME

(30) Priorité: 30.06.2021 FR 2107060
(43) Date de publication de la demande: 08.05.2024
(73) Titulaire: Saint-Gobain Sekurit France, 60150 Thourotte (FR)
(72) Inventeur: GONNET, Romain, 60610 LACROIX SAINT OUEN (FR)
(74) Mandataire: Saint-Gobain Recherche
(86) Numéro de dépôt international: PCT/EP2022/067217
(87) Numéro de publication internationale: WO 2023/274845

(56) Documents cités:
- EP-A1- 2 468 544
- DE-A1- 102007 012 486
- DE-A1- 19 747 961

## Description

### Domaine technique

L'invention concerne un vitrage de véhicule, et notamment un vitrage de toit, comportant un élément vitré, une portion de joint profilé et une plaque d'antenne, ainsi qu'un procédé de fabrication d'un tel vitrage.

L'élément vitré présente une face extérieure destinée à être orientée vers un espace extérieur, un chant et une face intérieure destinée à être orientée vers un espace intérieur.

La portion de joint profilé présente une face extérieure destinée à être orientée vers ledit espace extérieur et une face intérieure destinée à être orientée vers ledit espace intérieur, ladite portion de joint profilé étant fixée à au moins un bord dudit élément vitré avec la face extérieure de ladite portion de joint profilé en continuité de surface avec la face extérieure dudit élément vitré.

La plaque d'antenne présente une face extérieure destinée à être orientée vers ledit espace extérieur et une face intérieure destinée à être orientée vers ledit espace intérieur et présentant une partie de fixation qui est intégrée dans ladite portion de joint profilé et une partie externe s'étendant en dehors de ladite portion de joint profilé.

### Arrière-plan technique

L'art antérieur connaît de la demande de brevet N° DE102007012486 un tel vitrage selon le préambule de la revendication 1.

Lorsque cette configuration est observée en coupe transversale, à l'endroit où la plaque d'antenne pénètre dans la portion de joint profilé l'angle entre la plaque d'antenne et la portion de joint profilé est un angle aigue. Il y a un jeu entre la portion de joint profilé et la plaque d'antenne.

Cette configuration connue n'est pas satisfaisant car des salissures peuvent rester à l'endroit où la plaque d'antenne pénètre dans la portion de joint profilé.

En outre, un angle aigue provoque l'émission d'onde acoustique lorsque le véhicule roule.

### Résumé de l'invention

### Problème technique

La présente invention entend proposer une solution qui facilite l'entretien du vitrage et l'entretien du véhicule.

De plus, la solution proposée améliore la pénétration dans l'air et réduit le bruit aérodynamique de la configuration antérieure.

### Solution au problème technique

La présente invention repose sur la découverte surprenante qu'il est possible de réaliser un double affleurement (ou double « flush », en anglais), à la fois de la portion de joint profilé avec l'élément vitré et à la fois de la plaque d'antenne avec la portion de joint, alors même que l'élément vitré et la plaque d'antenne sont deux éléments relativement massifs qui présentent des tolérances de fabrication différentes et des coefficients de dilatation différents.

En outre, il est alors possible de réaliser un creux dans la face extérieure de la portion de point profilé dont la forme est adaptée à l'évacuation de l'eau, des saletés et à la réduction du bruit aérodynamique. Il est ainsi possible de réaliser un creux dans la face extérieure de la portion de point profilé, entre les deux affleurements, dont les angles sont arrondis.

La présente invention se rapporte ainsi à un vitrage de véhicule selon la revendication 1. Ce vitrage de véhicule, peut notamment être un vitrage de toit ; il comporte :
- un élément vitré présentant une face extérieure destinée à être orientée vers un espace extérieur, un chant et une face intérieure destinée à être orientée vers un espace intérieur,
- une portion de joint profilé présentant une face extérieure destinée à être orientée vers ledit espace extérieur et une face intérieure destinée à être orientée vers ledit espace intérieur, ladite portion de joint profilé étant fixée à au moins un bord dudit élément vitré avec la face extérieure de ladite portion de joint profilé en continuité de surface avec la face extérieure dudit élément vitré,
- une plaque d'antenne présentant une face extérieure destinée à être orientée vers ledit espace extérieur et une face intérieure destinée à être orientée vers ledit espace intérieur et présentant une partie de fixation qui est intégrée dans ladite portion de joint profilé et une partie externe s'étendant en dehors de ladite portion de joint profilé,
ce vitrage étant remarquable en ce que la face extérieure de ladite plaque d'antenne est en continuité de surface avec la face extérieure de ladite portion de joint profilé.

La notion de continuité de surface au sens de la présente invention, ou « affleurement », signifie que visuellement, de l'espace extérieur, les deux surfaces paraissent dans la continuité l'une de l'autre. Dans la pratique, il est possible de mesurer une différence de hauteur allant jusqu'à 1 mm en raison des tolérances de fabrication. Bien que souhaitée, une valeur 0,0 mm pour 100 % des deux affleurements des vitrages n'est pas atteignable en pratique ; l'homme du métier le sait bien.

Vu en coupe transversale, il est possible que la face extérieure de ladite portion de joint profilé soit dans la même continuité de surface (même droite ou même courbe) à la fois avec la face extérieure dudit élément vitré et avec la face extérieure de ladite plaque d'antenne.

La face extérieure de ladite portion de joint profilé peut présenter une marche et qui est situé entre l'élément vitré et ladite partie externe de la plaque d'antenne, afin de faciliter la fabrication du vitrage ; ladite marche présentant de préférence une hauteur d'au plus 1 mm afin de faciliter l'évacuation de l'eau, des saletés et de réduire le bruit aérodynamique.

La face extérieure de ladite portion de joint profilé peut présenter un creux orienté vers ledit espace intérieur et qui est situé entre l'élément vitré et ladite partie externe de la plaque d'antenne, afin de permettre l'évacuation de l'eau et des saletés et à la réduction ; ledit creux présentant de préférence des angles arrondis afin de faciliter l'évacuation de l'eau, des saletés et de réduire le bruit aérodynamique. Ledit creux peut être situé plus près de la partie externe de la plaque d'antenne que de l'élément vitré.

Pour faciliter la réalisation de l'intégration de la partie de fixation de ladite plaque d'antenne à l'intérieur de ladite portion de joint profilé, il est possible de prévoir que cette partie de fixation de ladite plaque d'antenne s'étende essentiellement en vis-à-vis du chant de l'élément vitré ; il est possible de prévoir que cette partie de fixation de ladite plaque d'antenne ne comporte pas de partie orientée sensiblement parallèlement à la face intérieure dudit élément vitré ; il est possible de prévoir que cette partie de fixation de ladite plaque d'antenne ne s'étendent pas en vis-à-vis de la face intérieure dudit élément vitré.

Ladite partie de fixation présente au moins un, et de préférence plusieurs, trou(s) pour augmenter l'ancrage mécanique de la partie de fixation dans ladite portion de joint profilé.

La présente invention se rapporte par ailleurs à un procédé de fabrication d'un vitrage de véhicule, et notamment vitrage de toit, selon la revendication 4,
ledit vitrage comportant :
   - un élément vitré présentant une face extérieure destinée à être orientée vers un espace extérieur, un chant et une face intérieure destinée à être orientée vers un espace intérieur,
   - une portion de joint profilé présentant une face extérieure destinée à être orientée vers ledit espace extérieur et une face intérieure destinée à être orientée vers ledit espace intérieur, ladite portion de joint profilé étant fixée à au moins un bord dudit élément vitré avec la face extérieure de ladite portion de joint profilé en continuité de surface avec la face extérieure dudit élément vitré,
   - une plaque d'antenne présentant une face extérieure destinée à être orientée vers ledit espace extérieur et une face intérieure destinée à être orientée vers ledit espace intérieur et présentant une partie de fixation qui est intégrée dans ladite portion de joint profilé et une partie externe s'étendant en dehors de ladite portion de joint profilé,
ledit procédé comportant une étape de moulage dans laquelle ledit élément vitré est situé dans un moule d'encapsulation présentant une cavité de moulage correspondant à la forme de ladite portion de joint profilé,
ledit procédé étant remarquable en ce que, pendant ladite étape de moulage, au moins une partie de moule présente une face extérieure de moulage réalisant à la fois la face extérieure de ladite portion de joint profilé en continuité de surface avec la face extérieure dudit élément vitré et à la fois la face extérieure de ladite portion de joint profilé en continuité de surface avec la face extérieure de ladite plaque d'antenne.

Ladite face de moulage peut être unique, c'est-à-dire d'un seul tenant.

Ladite face de moulage peut être en deux parties contiguës, avec une séparation située au contact de la face extérieure de ladite portion de joint profilé.

Une partie de ladite face de moulage en contact avec la face extérieure dudit élément vitré peut alors être en métal ou alliage métallique et une partie de ladite face de moulage en contact avec la face extérieure de ladite plaque d'antenne peut être en] en un matériau présentant une dureté Shore A comprise entre 45 et 90, voire entre 55 et 85.

Ladite séparation est, de préférence, située dans un creux orienté vers ledit espace intérieur et qui est situé entre l'élément vitré et ladite partie extérieure, afin que l'empreinte de la séparation sur la face extérieure de la portion de joint profilé soit plus discrète, le cas échéant.

### Avantages de l'invention

Grâce au double affleurement, il y a une double continuité de surface et cela, à la fois empêche les salissures de rester et à la fois améliore l'esthétique, la pénétration dans l'air et la réduction des bruits aérodynamiques.

Grâce au creux à angles arrondis, l'eau et les saletés sont correctement évacuées et peu de bruit est créé lorsque le véhicule avance.

Avantageusement, le procédé selon l'invention permet de réaliser une adaptation simple, fiable et précise des contours de la cavité de moulage aux différentes variations de galbes nécessairement constatées dans une série de vitrages bombés identiques (même bombage général, pour fermer la même baie).

Avantageusement, l'invention peut être mise en œuvre pour un cordon profilé périphérique, c'est-à-dire faisant tout le tour de la vitre. Un tel cordon profilé est particulièrement difficile à réaliser.

Avantageusement en outre, l'invention permet d'utiliser des moules à une seule cavité de moulage pour tout le pourtour de l'élément vitré.

### Brève description des dessins

[Fig.1] est une vue éclatée en perspective d'une antenne pour la mise en œuvre de l'invention.
[Fig.2] est une vue en coupe partielle d'une première variante de réalisation d'un moule pour l'intégration d'une antenne selon l'invention.
[Fig.3] est une vue en coupe partielle d'une seconde variante d'un moule pour l'intégration d'une antenne selon l'invention.
[Fig.4] est une vue en coupe partielle d'une troisième variante de réalisation d'un moule pour l'intégration d'une antenne selon l'invention.
[Fig.5] est une vue en coupe partielle d'une quatrième variante de réalisation d'un moule pour l'intégration d'une antenne selon l'invention.
[Fig.6] est une vue en coupe partielle d'un premier mode de réalisation d'un vitrage selon l'invention.
[Fig.7] est une vue en coupe partielle d'un second mode de réalisation d'un vitrage selon l'invention.

### Description détaillée de variantes de mises en œuvre de l'invention et de modes de réalisation de l'invention

Le vitrage 1 de véhicule est constitué au moins d'un élément vitré 2, d'une portion de joint profilé 3, ainsi que d'une plaque d'antenne 4.

Le vitrage 1 est destiné à fermer une baie, et en particulier une baie d'un toit de véhicule, en réalisant une séparation entre un espace extérieur E qui est à l'extérieur du véhicule et un espace intérieur I, qui est à l'intérieur du véhicule. L'élément vitré 2 présente ainsi une face extérieure 20 destinée à être tournée vers l'espace extérieur E, une face intérieure 22 qui est destinée à être tournée vers l'espace intérieur I, ainsi qu'un chant périphérique 21, situé entre ces deux faces.

L'élément vitré 2 peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés, ou entre lesquelles est présent au moins un espace intercalaire dans le cas des vitrages multiples (doubles vitrages, triples vitrages, ...). La (ou les) feuille(s) de matière peut (ou peuvent) être minérale(s), notamment en verre, ou organique(s), notamment en matière plastique.

La portion de joint profilé 3 présent une face extérieure 30 destinée à être orientée vers l'espace extérieur E et une face intérieure 32 destinée à être orientée vers l'espace intérieur I. La portion de joint profilé 3 est fixée à la fois à un bord de l'élément vitré 2 et à la fois à un bord de la plaque d'antenne 4.

La plaque d'antenne 4 présentant une face extérieure 40 destinée à être orientée vers l'espace extérieur E et une face intérieure 42 destinée à être orientée vers l'espace intérieur I. La plaque d'antenne 4 présente deux parties : une partie de fixation 45 qui est intégrée dans la portion de joint profilé 3 (elle est moulée dans cette portion de joint profilé) et une partie externe 46 s'étendant en dehors de ladite portion de joint profilé 3 et permettant l'attachement d'une cellule électronique 5 et d'un capot de protection 6.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

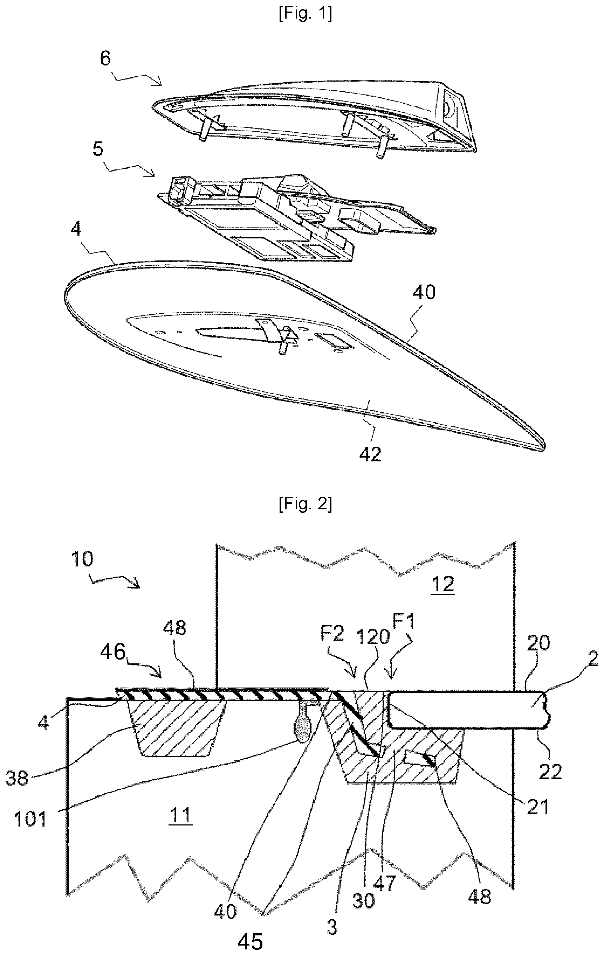

Comme visible sur les vues en coupe transversales des figures 2 à 5, la portion de joint profilé 3 est fabriquée par mise en œuvre d'un procédé de fabrication appelé « encapsulation » car il comporte une étape de moulage du portion profilé dans un dispositif de moulage 10 comportant un moule comportant au moins une partie fixe de moule 11 et au moins une partie mobile de moule 12, voire plusieurs partie mobile de moule 12, 12', qui est (ou qui sont) mobile(s) par rapport à la partie fixe de moule, lesdites parties de moule coopérant à l'état fermé du moule, pendant l'étape de moulage, avec l'élément vitré 2 et la plaque d'antenne 4 pour former une cavité de moulage présentant en coupe la forme du profil du portion profilé 3.

Le dispositif de moulage 10 comporte par ailleurs des moyens pour ouvrir et fermer le moule, ainsi que de moyens pour appliquer une pression sur le moule lors de l'injection de la matière formant la portion de joint profilé dans la cavité de moulage ; ces moyens ne sont pas illustrés ici.

Pour fabriquer la portion de joint profilé par moulage, l'élément vitré 1 est positionné dans une partie de moule, ici la partie fixe de moule 11, inférieure, puis une partie mobile de moule 12, 12', supérieure, est positionnée sur la partie fixe de moule 11, afin de former dans l'espace fermé entre ces deux parties de moule la cavité de moulage.

Le bord de l'élément vitré pénètre ainsi dans la cavité de moulage pour pouvoir mouler la portion de joint profilé à la périphérie de l'élément vitré 2.

Le mouvement d'ouverture et de fermeture du moule, c'est-à-dire le déplacement de la partie mobile de moule 12, 12' par rapport à la partie fixe de moule 11 est ici un mouvement selon la direction verticale, mais ce mouvement pourrait aussi être selon la direction horizontale ou selon toute autre direction, éventuellement courbée.

La matière plastique constitutive de la portion de joint profilé est injectée dans la cavité de moulage par l'intermédiaire d'au moins un orifice d'injection (non illustré).

Du fait que l'élément vitré 2 n'est pas plat mais bombé (bien que cela ne soit pas visible sur les figures), il se pose un problème d'adaptation des éléments vitrés 2 dans le moule pour une même série de vitrage. En effet, les technologies qui permettent de réaliser un élément vitré bombé, et en particulier la technique de bombage de feuille (s) de verre minéral ne permettent pas de garantir une reproductibilité absolue de la courbe d'un élément vitré à l'autre à l'intérieur d'une série : il existe toujours une tolérance de fabrication, qui est au mieux de l'ordre de 1,0 voire parfois 1,5 millimètre, suivant la dimension de l'élément vitré.

Un système d'aspiration est situé dans la partie fixe de moule ; ce système d'aspiration réalise une dépression entre deux joints et pendant l'injection de la matière plastique afin de permettre de conserver l'élément vitré en place dans le moule.

Comme visible sur les figures 2 à 5, lorsque le moule est fermé, le pourtour de la cavité de moulage est défini, dans sa partie basse :
- par une partie de la face interne de la partie fixe de moule 11, celle qui est destinée à former la face intérieure 32 de la portion de joint profilé,
- par une partie de la face intérieure 42 de la plaque d'antenne, et
- par le chant 21 de l'élément vitré et une partie du bord périphérique de la face intérieure 22 de l'élément vitré,
et dans sa partie haute :
- par une partie de la face interne de la, ou des partie(s) mobile(s) de moule 12, 12', celle(s) qui est(sont) à destinée(s) à former la face extérieure 30 de la portion de joint profilé,
- par une partie de la face extérieure 40 de la plaque d'antenne, et
- par une partie du bord périphérique de la face extérieure 20 de l'élément vitré.

La cavité de moulage comporte par ailleurs la partie de fixation 45 qui est destinée à être intégrée dans la portion de joint profilé 3. De préférence, cette partie ne touche pas les parois de la cavité de moulage afin de faciliter le remplissage de cette cavité de moulage. Elle présente ainsi une extrémité 48 qui est complètement incorporée dans la portion de joint profilé 3.

Ainsi, dans les variantes de mise en œuvre des figures 2 à 5, procédé comporte une étape de moulage dans laquelle l'élément vitré 2 est situé dans le moule d'encapsulation 10 qui présente la cavité de moulage correspondant à la forme de la portion de joint profilé 3, et, pendant cette étape de moulage, la partie ou les partie mobile de moule 12, 12' présente une face de moulage extérieure 120 réalisant la face extérieure 30 de la portion de joint profilé 3 à la fois en continuité de surface F1 avec la face extérieure 20 de l'élément vitré 2 et à la fois en continuité de surface F2 avec la face extérieure 40 de la plaque d'antenne 4.

Il s'agit ainsi de réaliser une double continuité de surface, ou un double affleurement.

Pendant l'injection de la matière dans la cavité de moulage, la partie fixe de moule 11 réalise un contre-appui directement pour l'élément vitré 2 et indirectement pour la plaque d'antenne 4, grâce à un joint 101.

En [Fig.2] et 3, la face de moulage 120 est d'un seul tenant ; elle est donc unique pour le moule d'encapsulation 10.

En [Fig.2], la partie mobile de moule 12 prend directement appui sur l'élément vitré 2 et la plaque d'antenne 4.

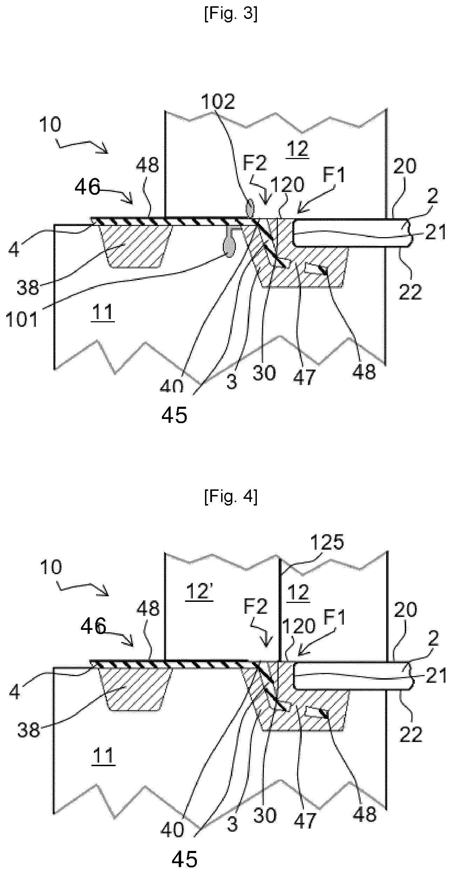

En [Fig.3], la partie mobile de moule 12 prend indirectement appui sur la plaque d'antenne 4, grâce à un joint 102.

Chaque joint 101, 102 peut être du type de celui décrit dans la demande internationale de brevet N° WO2018/002502.

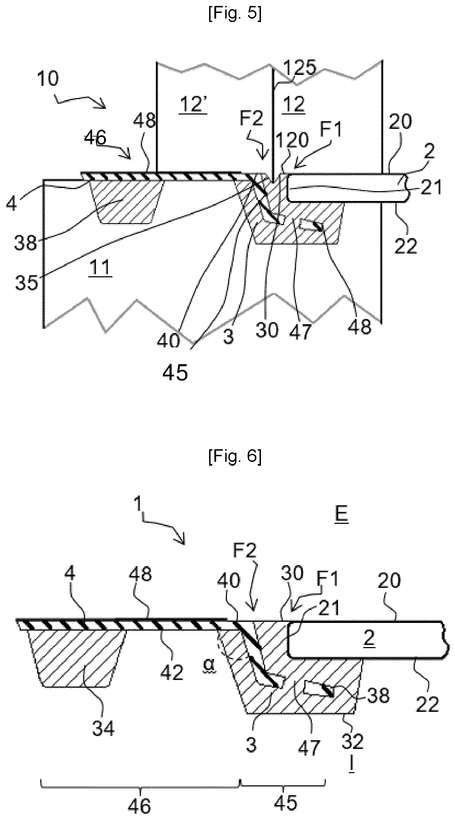

En figures 4 et 5, la face de moulage 120 n'est pas d'un seul tenant mais est en deux parties contiguës, avec ainsi une séparation 125 qui est située au contact de la face extérieure 30 de ladite portion de joint profilé 3, entre les deux continuités de surfaces F1 et F2. La séparation 125 est situé à au moins 3 mm de chaque continuité de surface F1 et F2 afin de limiter le risque qu'elle engendre un défaut à l'endroit de ces continuités de surfaces F1 et F2.

En figures 4 et 5, la partie mobile de moule 12 prend directement appui sur l'élément vitré 2 et la partie mobile de moule 12' prend directement appui sur la plaque d'antenne 4.

Une partie de la face de moulage 120 en contact avec la face extérieure 20 de l'élément vitré 2 est en métal ou alliage métallique (par exemple en acier) et une partie de la face de moulage 120 en contact avec la face extérieure 40 de la plaque d'antenne 4 est en un matériau présentant une dureté Shore A comprise entre 45 et 90, voire entre 55 et 85 ; elle peut être par exemple en Hytrel, marque déposée de la firme Dupont.

En [Fig.5], la face extérieure 30 de la portion de joint profilé 3 présente un creux 35 orienté vers l'espace intérieur I et qui est situé entre l'élément vitré 2 et la partie extérieure 46 et la séparation 125 est située dans ce creux 35, de préférence au fond de ce creux.

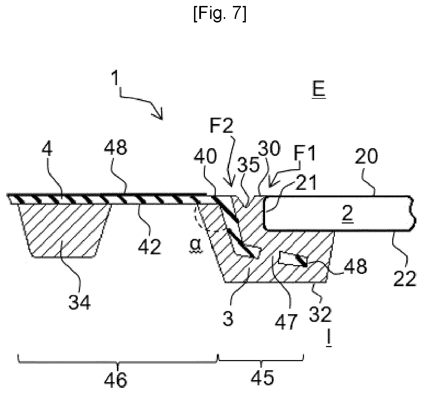

Les figures 6 et 7 montre un vitrage 1 obtenu par la mise en œuvre du procédé selon l'invention. La face extérieure 30 de la portion de joint profilé 3 à la fois en continuité de surface F1 avec la face extérieure 20 de l'élément vitré 2 et à la fois en continuité de surface F2 avec la face extérieure 40 de la plaque d'antenne 4.

La partie externe 46 est une plaque présentant un bord qui est situé en vis-à-vis du chant 21 de l'élément vitré 2, avec de la matière de portion de joint profilé 3 intercalé entre deux. Le bord de la partie externe 46 est ainsi en continuité de surface avec la portion de joint profilé 3.

La partie de fixation 45 s'étend, à partir de la partie externe 46 selon un angle α, de préférence supérieur à 90° et ici de 110 °. Elle s'étend à l'intérieur de la portion de joint profilé 3 et est ici complètement intégrée dans la portion de joint profilé 3. Elle présente ici un trou 47 par lequel la matière de la portion de joint profilé 3 pénètre lors de l'étape de moulage. Ce trou 47 est ainsi rempli de la matière de la portion de joint profilé 3 et augmente la fixation de la partie de fixation 45 dans la portion de joint profilé 3.

En [Fig.6], la face extérieure 30 de la portion de joint profilé 3 est plate ; ce mode de réalisation correspond au vitrage obtenu par la mise en œuvre d'une des variantes des figures 2 à 4.

En [Fig.7], la face extérieure 30 de la portion de joint profilé 3 présente un creux 35 orienté vers l'espace intérieur I et qui est situé entre l'élément vitré 2 et la partie extérieure 46 pour l'évacuation de l'eau et des salissures. Les bords et le fond de ce creux 35 ne sont pas des angles aigus mais présentent des angles arrondis pour faciliter l'évacuation de l'eau et des salissures. Cela correspond au vitrage obtenu par la mise en œuvre de la variante de la [Fig.5].

## Revendications

1. Vitrage (1) de véhicule, et notamment vitrage de toit, comportant :
- un élément vitré (2) présentant une face extérieure (20) destinée à être orientée vers un espace extérieur (E), un chant (21) et une face intérieure (22) destinée à être orientée vers un espace intérieur (I),
- une portion de joint profilé (3) présentant une face extérieure (30) destinée à être orientée vers ledit espace extérieur (E) et une face intérieure (32) destinée à être orientée vers ledit espace intérieur (I), ladite portion de joint profilé (3) étant fixée à au moins un bord dudit élément vitré (2) avec la face extérieure (30) de ladite portion de joint profilé (3) en continuité de surface (F1) avec la face extérieure (20) dudit élément vitré (2),
- une plaque d'antenne (4) présentant une face extérieure (40) destinée à être orientée vers ledit espace extérieur (E) et une face intérieure (42) destinée à être orientée vers ledit espace intérieur (I) et présentant une partie de fixation (45) qui est intégrée dans ladite portion de joint profilé (3) et une partie externe (46) s'étendant en dehors de ladite portion de joint profilé (3),
**caractérisé en ce que** la face extérieure (40) de ladite plaque d'antenne (4) est en continuité de surface (F2) avec la face extérieure (30) de ladite portion de joint profilé (3).

2. Vitrage (1) selon la revendication 1, dans lequel la face extérieure (30) de ladite portion de joint profilé (3) présente un creux (35) orienté vers ledit espace intérieur (I) et qui est situé entre l'élément vitré (2) et ladite partie extérieure (46), ledit creux (35) présentant de préférence des angles arrondis.

3. Vitrage (1) selon la revendication 1 ou 2, dans lequel ladite partie de fixation (45) présente au moins un, et de préférence plusieurs, trou(s) (47).

4. Procédé de fabrication d'un vitrage (1) de véhicule, et notamment vitrage de toit, selon l'une quelconque des revendications 1 à 3, ledit vitrage (1) comportant :
- un élément vitré (2) présentant une face extérieure (20) destinée à être orientée vers un espace extérieur (E), un chant (21) et une face intérieure (22) destinée à être orientée vers un espace intérieur (I),
- une portion de joint profilé (3) présentant une face extérieure (30) destinée à être orientée vers ledit espace extérieur (E) et une face intérieure (32) destinée à être orientée vers ledit espace intérieur (I), ladite portion de joint profilé (3) étant fixée à au moins un bord dudit élément vitré (2) avec la face extérieure (30) de ladite portion de joint profilé (3) en continuité de surface (F1) avec la face extérieure (20) dudit élément vitré (2),
- une plaque d'antenne (4) présentant une face extérieure (40) destinée à être orientée vers ledit espace extérieur (E) et une face intérieure (42) destinée à être orientée vers ledit espace intérieur (I) et présentant une partie de fixation (45) qui est intégrée dans ladite portion de joint profilé (3) et une partie externe (46) s'étendant en dehors de ladite portion de joint profilé (3),
ledit procédé comportant une étape de moulage dans laquelle ledit élément vitré (2) est situé dans un moule d'encapsulation (10) présentant une cavité de moulage correspondant à la forme de ladite portion de joint profilé (3),
**caractérisé en ce que**, pendant ladite étape de moulage, au moins une partie de moule (12, 12') présente une face extérieure de moulage (120) réalisant à la fois la face extérieure (30) de ladite portion de joint profilé (3) en continuité de surface (F1) avec la face extérieure (20) dudit élément vitré (2) et à la fois la face extérieure (30) de ladite portion de joint profilé (3) en continuité de surface (F2) avec la face extérieure (40) de ladite plaque d'antenne (4).

5. Procédé selon la revendication 4, dans lequel ladite face de moulage (120) est unique.

6. Procédé selon la revendication 4, dans lequel ladite face de moulage (120) est en deux parties contiguës, avec une séparation (125) située au contact de la face extérieure (30) de ladite portion de joint profilé (3).

7. Procédé selon la revendication 6, dans lequel une partie de ladite face de moulage (120) en contact avec la face extérieure (20) dudit élément vitré (2) est en métal ou alliage métallique et une partie de ladite face de moulage (120) en contact avec la face extérieure (40) de ladite plaque d'antenne (4) est en un matériau présentant une dureté Shore A comprise entre 45 et 90, voire entre 55 et 85.

8. Procédé selon la revendication 6 ou 7, dans lequel ladite séparation (125) est située dans un creux (35) orienté vers ledit espace intérieur (I).

## Patentansprüche

1. Fahrzeugverglasung (1) und insbesondere eine Dachverglasung, umfassend:
- ein verglastes Element (2), das eine Außenfläche (20), die dafür vorgesehen ist, zu einem Außenraum (E) hin ausgerichtet zu sein, eine Kante (21) und eine Innenfläche (22), die dafür vorgesehen ist, zu einem Innenraum (I) hin ausgerichtet zu sein, aufweist,
- einen Dichtungsprofilabschnitt (3), der eine Außenfläche (30), die dafür vorgesehen ist, zu dem Außenraum (E) hin ausgerichtet zu sein, und eine Innenfläche (32), die dafür vorgesehen ist, zu dem Innenraum (I) hin ausgerichtet zu sein, aufweist, wobei der Dichtungsprofilabschnitt (3) an mindestens einem Rand des verglasten Elements (2) befestigt ist, wobei die Außenfläche (30) des Dichtungsprofilabschnitts (3) in Oberflächenkontinuität (F1) mit der Außenfläche (20) des verglasten Elements (2) ist,
- eine Antennenplatte (4), die eine Außenseite (40), die dafür vorgesehen ist, zu dem Außenraum (E) hin ausgerichtet zu sein, und eine Innenseite (42), die dafür vorgesehen ist, zu dem Innenraum (I) hin ausgerichtet zu sein, aufweist, und einen Befestigungsteil (45), der in den Dichtungsprofilabschnitt (3) integriert ist, und einen Außenteil (46), der sich außerhalb des Dichtungsprofilabschnitts (3) erstreckt, aufweist,
**dadurch gekennzeichnet, dass** die Außenfläche (40) der Antennenplatte (4) eine Oberflächenkontinuität (F2) mit der Außenfläche (30) des Dichtungsprofilabschnitts (3) besitzt.

2. Verglasung (1) nach Anspruch 1, wobei die Außenfläche (30) des Dichtungsprofilabschnitts (3) eine Vertiefung (35) aufweist, die zu dem Innenraum (I) hin ausgerichtet ist, und die zwischen dem verglasten Element (2) und dem Außenteil (46) gelegen ist, wobei die Vertiefung (35) vorzugsweise abgerundete Ecken aufweist.

3. Verglasung (1) nach Anspruch 1 oder 2, wobei der Befestigungsteil (45) mindestens ein und vorzugsweise mehrere Löcher (47) aufweist.

4. Verfahren zum Herstellen einer Fahrzeugverglasung (1), und insbesondere einer Dachverglasung, nach einem der Ansprüche 1 bis 3, die Verglasung (1) umfassend:
- ein verglastes Element (2), das eine Außenfläche (20), die dafür vorgesehen ist, zu einem Außenraum (E) hin ausgerichtet zu sein, eine Kante (21) und eine Innenfläche (22), die dafür vorgesehen ist, zu einem Innenraum (I) hin ausgerichtet zu sein, aufweist,
- einen Dichtungsprofilabschnitt (3), der eine Außenfläche (30), die dafür vorgesehen ist, zu dem Außenraum (E) hin ausgerichtet zu sein, und eine Innenfläche (32), die dafür vorgesehen ist, zu dem Innenraum (I) hin ausgerichtet zu sein, aufweist, wobei der Dichtungsprofilabschnitt (3) an mindestens einem Rand des verglasten Elements (2) befestigt ist, wobei die Außenfläche (30) des Dichtungsprofilabschnitts (3) in Oberflächenkontinuität (F1) mit der Außenfläche (20) des verglasten Elements (2) ist,
- eine Antennenplatte (4), die eine Außenseite (40), die dafür vorgesehen ist, zu dem Außenraum (E) hin ausgerichtet zu sein, und eine Innenseite (42), die dafür vorgesehen ist, zu dem Innenraum (I) hin ausgerichtet zu sein, aufweist, und einen Befestigungsteil (45), der in den Dichtungsprofilabschnitt (3) integriert ist, und einen Außenteil (46), der sich außerhalb des Dichtungsprofilabschnitts (3) erstreckt, aufweist, das Verfahren umfassend einen Formgussschritt, in dem das verglaste Element (2) in einer Einkapselungsform (10) gelegen ist, die einen Formhohlraum aufweist, der der Form des Dichtungsprofilabschnitts (3) entspricht,
**dadurch gekennzeichnet, dass,** während des Formgussschritts mindestens ein Formteil (12, 12') eine Formgussaußenfläche (120) aufweist, die sowohl die Außenfläche (30) des Dichtungsprofilabschnitts (3) in Oberflächenkontinuität (F1) mit der Außenfläche (20) des verglasten Elements (2) als auch gleichzeitig die Außenfläche (30) des Dichtungsprofilabschnitts (3) in Oberflächenkontinuität (F2) mit der Außenfläche (40) der Antennenplatte (4) bildet.

5. Verfahren nach Anspruch 4, wobei die Formgussfläche (120) einzigartig ist.

6. Verfahren nach Anspruch 4, wobei die Formgussfläche (120) aus zwei aneinandergrenzenden Teilen besteht, wobei eine Trennung (125) in Kontakt mit der Außenfläche (30) des Dichtungsprofilabschnitts (3) gelegen ist.

7. Verfahren nach Anspruch 6, wobei ein Teil der Formgussfläche (120), der mit der Außenfläche (20) des verglasten Elements (2) in Kontakt steht, aus Metall oder einer Metalllegierung ist und ein Teil der Formgussfläche (120), der mit der Außenfläche (40) der Antennenplatte (4) in Kontakt steht, aus einem Material ist, das eine Shore-A-Härte, die zwischen 45 und 90 oder sogar zwischen 55 und 85 liegt, aufweist.

8. Verfahren nach Anspruch 6 oder 7, wobei die Trennung (125) in einer Vertiefung (35) gelegen ist, die zu dem Innenraum (I) hin ausgerichtet ist.

## Claims

1. A vehicle glazed unit (1), and in particular roof glazed unit, including:
- a glazed element (2) having an exterior face (20) intended to be oriented toward an exterior space (E), an edge face (21) and an interior face (22) intended to be oriented toward an interior space (I),
- a molded seal portion (3) having an exterior face (30) intended to be oriented toward said exterior space (E) and an interior face (32) intended to be oriented toward said interior space (I), said molded seal portion (3) being attached to at least one edge of said glazed element (2) with the exterior face (30) of said molded seal portion (3) in surface continuity (F1) with the exterior face (20) of said glazed element (2),
- an antenna plate (4) having an exterior face (40) intended to be oriented toward said exterior space (E) and an interior face (42) intended to be oriented toward said interior space (I) and having an attachment part (45) which is integrated into said molded seal portion (3) and an external part (46) extending outside said molded seal portion (3),
**characterized in that** the exterior face (40) of said antenna plate (4) is in surface continuity (F2) with the exterior face (30) of said molded seal portion (3).

2. The glazed unit (1) according to claim 1, wherein the exterior face (30) of said molded seal portion (3) has a recess (35) oriented toward said interior space (I) and which is located between the glazed element (2) and said exterior part (46), said recess (35) preferably having rounded angles.

3. The glazed unit (1) according to claim 1 or 2, wherein said attachment part (45) has at least one, and preferably several, hole(s) (47).

4. A method for manufacturing a vehicle glazed unit (1), and in particular roof glazed unit, according to any one of claims 1 to 3, said glazed unit (1) including:
- a glazed element (2) having an exterior face (20) intended to be oriented toward an exterior space (E), an edge face (21) and an interior face (22) intended to be oriented toward an interior space (I),
- a molded seal portion (3) having an exterior face (30) intended to be oriented toward said exterior space (E) and an interior face (32) intended to be oriented toward said interior space (I), said molded seal portion (3) being attached to at least one edge of said glazed element (2) with the exterior face (30) of said molded seal portion (3) in surface continuity (F1) with the exterior face (20) of said glazed element (2),
- an antenna plate (4) having an exterior face (40) intended to be oriented toward said exterior space (E) and an interior face (42) intended to be oriented toward said interior space (I) and having an attachment part (45) which is integrated into said molded seal portion (3) and an external part (46) extending outside said molded seal portion (3),
said method including a molding step wherein said glazed element (2) is located in an encapsulation mold (10) having a molding cavity corresponding to the shape of said molded seal portion (3),
**characterized in that**, during said molding step, at least one mold part (12, 12') has an exterior molding face (120) producing both the exterior face (30) of said molded seal portion (3) in surface continuity (F1) with the exterior face (20) of said glazed element (2) as well as the exterior face (30) of said molded seal portion (3) in surface continuity (F2) with the exterior face (40) of said antenna plate (4).

5. The method according to claim 4, wherein said molding face (120) is unique.

6. The method according to claim 4, wherein said molding face (120) is in two contiguous parts, with a separation (125) located in contact with the exterior face (30) of said molded seal portion (3).

7. The method according to claim 6, wherein a part of said molding face (120) in contact with the exterior face (20) of said glazed element (2) is made of metal or metal alloy and a part of said molding face (120) in contact with the exterior face (40) of said antenna plate (4) is made of a material having a Shore A hardness of between 45 and 90, or even between 55 and 85.

8. The method according to claims 6 or 7, wherein said separation (125) is located in a recess (35) oriented towards said interior space (I).
